Europäisches Patentamt

European Patent Office

Office européen des brevets

(11) Veröffentlichungsnummer: **0 499 191 A1**

# EUROPÄISCHE PATENTANMELDUNG

(21) Anmeldenummer: **92102224.0**

(22) Anmeldetag: **11.02.92**

(51) Int. Cl.⁵: **B65D 45/34**, F16B 2/08, F16B 2/18

(30) Priorität: **14.02.91 DE 9101683 U**

(43) Veröffentlichungstag der Anmeldung:
**19.08.92 Patentblatt 92/34**

(84) Benannte Vertragsstaaten:
**AT BE DE FR GB NL**

(71) Anmelder: **SCHEMM GmbH**
**Papiermühle**
**W-5952 Attendorn(DE)**

(72) Erfinder: **Wurm, Karl-Josef**
**Grafweg 4**
**W-5952 Attendorn(DE)**
Erfinder: **Lahme, Winfried**
**Wilkenberg 62**
**W-5882 Meinerzhagen(DE)**

(74) Vertreter: **Hassler, Werner, Dr.**
**Postfach 17 04 Asenberg 62**
**W-5880 Lüdenscheid(DE)**

(54) **Spannband.**

(57) Ein Spannband mit einen U-förmigen Querschnitt aufweisenden Profilteilen und mit einem Spannverschluß. Das technische Problem ist die Bereitstellung eines Spannbandes, das bei Verformung eine Rückstellfähigkeit hat, so daß in jedem Fall eine Dichtigkeit des Verschlusses bzw. des Fasses gewährleistet ist. Das Band (1) besteht aus einem rückstellfähigen, elastischen Werkstoff, und eine Mehrzahl von bogenabschnittförmigen Profilteilen (7) sind einzeln und formschlüssig an dem Band (1) befestigt.

Fig.1

EP 0 499 191 A1

Die Erfindung betrifft ein Spannband mit einen U-förmigen Querschnitt aufweisenden Profilteilen und mit einem Spannverschluß.

Ein derartiges Spannband ist in der GB-PS 1 249 499 beschrieben. Es sind nur drei, durch Laschen miteinander verbundene Profilteile vorhanden, die an einem Spannband befestigt sind und durch dasselbe zusammengehalten werden. Die Profilteile sind also durch das Spannband und die Laschen zweifach in ihrer Lage gesichert. Dieses Spannband ist zur Befestigung von Bauteilen bestimmt. Verformungen kann diese Anordnung offenbar nicht aufnehmen.

Ein ähnllicher Spannband zur Befestigung von Bauteilen ist aus der DE-OS 2 655 772 bekannt, bei dem die Profilteile verschiebbar mit dem Spannband verbunden sind. Das Spannband besteht aus zwei Halbbändern. Eine solche Anordnung ist zum Verschließen von Faßdeckeln nicht brauchbar.

Zum Verschließen von Faßdeckeln setzt man Spannbänder der eingangs genannten Art ein. Die Randstege des Faßmantels und des Deckels müssen dichtschließend zusammengehalten werden, auch wenn eine Verformung des Spannbandes bei einem Fall oder einer anderen Belastung eintritt. Denn der Faßinhalt, der eine aggressive Substanz oder Flüssigkeit sein kann, darf nicht austreten.

Aufgabe der Erfindung ist die Bereitstellung eines Spannbandes, das bei Verformung eine Rückstellfähigkeit hat, so daß in jedem Fall eine Dichtigkeit des Verschlusses bzw. des Fasses gewährleistet ist.

Diese Aufgabe wird nach der Erfindung dadurch gelöst, daß das Band einem rückstellfähigen, elastischen Werkstoff besteht und daß eine Mehrzahl von bogenabschnittförmigen Profilteilen eingreift und formschlüssig an dem Band befestigt sind.

Die Erfindung unterscheidet sich insofern vom Stand der Technik, als das elastische Band bei einer Verformung eine Rückstellfähigkeit hat. Hierdurch werden die einzelnen Profilteile nach einer Verformung wieder in die Ausgangslage mitgenommmen und positioniert, so daß immer ein ausreichend dichter Abschluß des Fasses gewährleistet ist. Die Mehrzahl der bogenabschnittförmigen Profilteile sichert an zahlreichen Stellen des Umfangs ein dichtes Zusammenpressen der Randstege.

Das Band kann ein Stahlband oder Kunststoffband sein.

Eine ausgewogene Anzahl von Profilteilen stellen 8 bis 12 Profilteile dar. Mam verteilt so den Anpreßdruck auf eine genügende Anzahl von Stellen am Umfang des Deckels, so daß auch in ungünstigen Fällen eine Dichtigkeit gewährleistet ist.

Zur Aussteifung der Profilteile ist vorgesehen, daß die Profilteile Quersicken aufweisen.

Eine stabile und einfache Befestigung der Profilteile ergibt sich dadurch, daß die Profilteile freigeschnitte Krallen an das Band sind.

Eine andere Befestigung des Spannbandes erzielt man dadurch, daß das Band durch Querschlitze der Profilteile hindurchgeführt ist.

Eine Nachspannung des Spannrings wird dadurch sichergestellt, daß innerhalb des Spannhebels Anlenkung Verbindungslasche eine Federung ist.

Ausführungsbeispiele der Erfindung werden im Folgenden unter Bezugnahme auf die anliegenden Zeichnungen erläutert, in denen darstellen:

Fig. 1 eine Gesamtansicht eines Spannbandes,
Fig. 2 einen Schnitt nach der Linie II-II in Fig. 1,
Fig. 3 ein weiteres Ausführungsbeispiel des Spannbandes,
Fig. 4 ein weiteres Ausführungsbeispiel und
Fig. 5 eine Teilansicht in Richtung V.

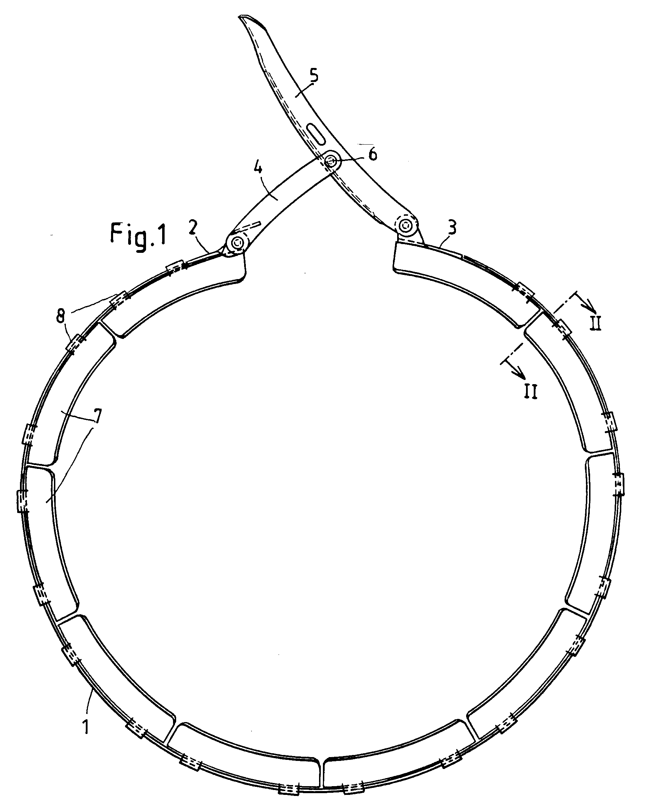

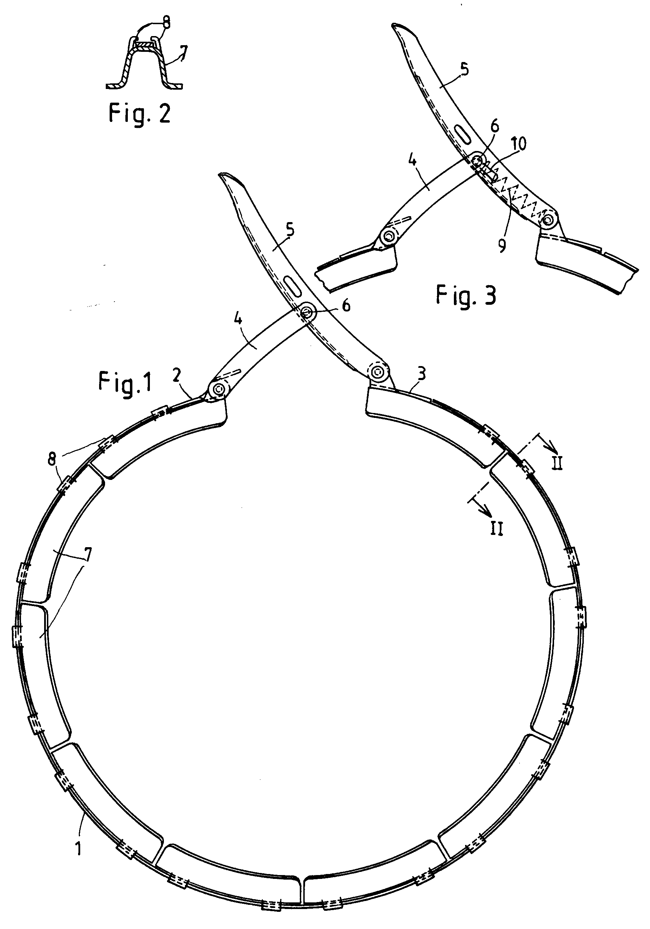

Das Spannband umfaßt nach Fig. 1 ein Band 1 aus einem elastischen, rückstellfähigen Stoff. Das Band 1 kann ein Stahlband oder ein Kunststoffband sein. Jeweils an den Enden des Bandes sind Lagerplatten 2 und 3 befestigt. Die Befestigung kann durch Schweißen, durch Biegen, durch Umlegen oder in anderer Weise erfolgen. An der Lagerplatte 3 ist eine Verbindungslasche 4 angelenkt. An der Lagerplatte 3 ist ein Spannhebel 5 angelenkt. Der Spannhebel 5 ist mit der Verbindungslasche 4 durch eine Gelenkverbindung als Anlenkung 6 gelenkig verbunden.

Nach der Erfindung sind 8 bis 12, vorzugsweise 10, Profilteile 7 mit einem U-förmigen Querschnitt gemäß Fig. 2 vorgesehen. Die Profilteile 7 sind als Bogenabschnitte ausgebildet und schließen sich zu einem Kreisbogen zusammen. Die Profilteile 7 sind in der dargestellten Ausführungsform durch freigeschnittene Krallen 8 fest mit dem Band 1 verklammert. Man kann selbstverständlich auch eine andere Verbindung vorsehen. Die Profilteile 7 können aus Blech oder Kunststoff geformt sein.

Die Funktion des Spannbandes ergibt sich ohne Weiteres aus der Darstellung der Fig. 1 und entspricht einer herkömmlichen Funktion. Die Randstege des Deckels und des Faßmantels werden an zahlreichen Stellen des Umfangs fest und dicht zusammengepreßt. Bei einem Fall oder einer anderen Verformung des Bandes 1 kehrt dasselbe infolge seiner elastischen Eigenschaften wieder in seine Ausgangslage zurück und nimmt dabei die Profilteile 7 mit. Infolgedessen stellt sich das Spannband nach einer Verformung in seine Kreisform zurück, so daß immer ein dichter Abschluß des jeweiligen Gebindes gewährleistet ist.

Fig. 3 zeigt ein abgewandeltes Ausführungsbeispiel der Erfindung, bei der die Anlenkung 6 der Spannlasche 4 durch eine Feder 9 oder eine andere Federung beweglich abgestützt ist. Die Anlenkung 6 ist innerhalb eines Schlitzes 10 des Spannhebels 5 geführt. Durch diese Ausbildung erreicht man ein jeweiliges Nachspannen des Bandes, wenn der Faßumfang unter Temperatureinflüssen oder anderen Einflüssen schwindet.

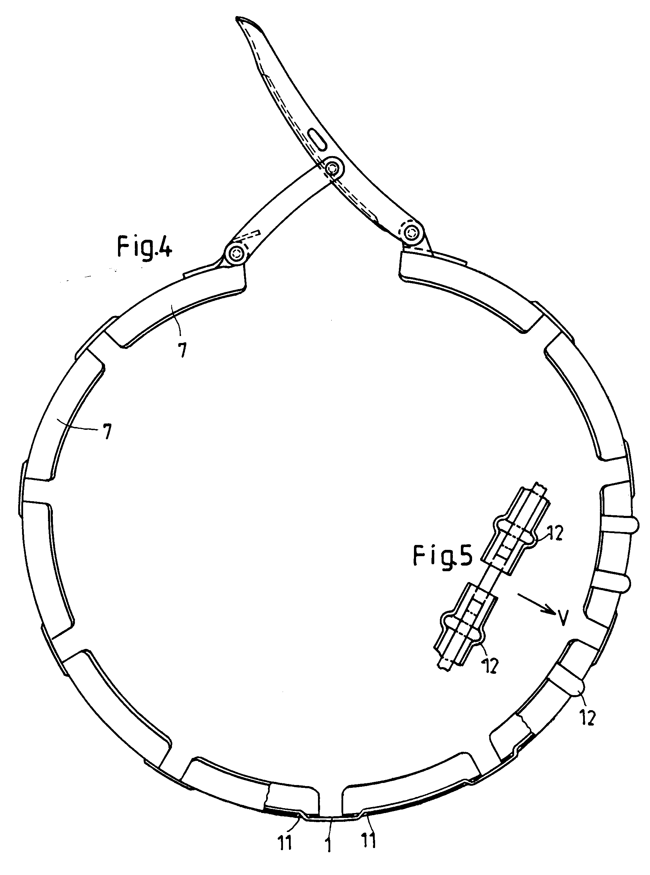

Bei dem Ausführungsbeispiel nach Fig. 4 sind im Rücken der Profilteile 7 Schlitze 11 ausgeschnitten, durch die das Band 1 hindurchgezogen oder durchgefädelt ist. Dieses stellt einen besonderen Halt der Profilteile 7 sicher.

Fig. 5 zeigt die Anordnung von Quersicken 12 in den Profilteilen 7, wodurch eine weitere Aussteifung erzielt wird. Die Quersicken 11 sind erforderlichenfalls an allen Profilteilen in der zweckmäßigen Anzahl vorgesehen.

**Patentansprüche**

1. Spannband mit einen U-förmigen Querschnitt aufweisenden Profilteilen und mit einem Spannverschluß, dadurch gekennzeichnet, daß das Band (1) aus einem rückstellfähigen, elastischen Werkstoff besteht und daß eine Mehrzahl von bogenabschnittförmigen Profilteilen (7) einzeln und formschlüssig an dem Band (1) befestigt sind.

2. Spannband nach Anspruch 1, gekennzeichnet durch ein Stahlband.

3. Spannband nach Anspruch 1 oder 2, gekennzeichnet durch 8 bis 12 Profilteile.

4. Spannband nach einem der Ansprüche 1 bis 3, dadurch gekennzeichnet, daß die Profilteile Quersicken aufweisen.

5. Spannband nach einem der Ansprüche 1 bis 4, dadurch gekennzeichnet, daß die Profilteile (7) durch freigeschnitte Krallen an das Band (1) angekrallt sind.

6. Spannband nach einem der Ansprüche 1 bis 5, dadurch gekennzeichnet, daß das Band durch Querschlitze der Profilteile hindurchgeführt ist.

7. Spannband nach einem der Ansprüche 1 bis 6 mit einem als Spannhebel ausgebildeten Spannverschluß, dadurch gekennzeichnet, daß innerhalb des Spannhebels (5) die Anlenkung (6) der Verbindungslasche (4) durch eine Federung (9) abgestützt ist.

Fig.1

Fig. 2

Fig. 3

Fig.1

Fig.4

Fig.5

7

7

12

12

12

V

11   1   11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 028 993 (FRIEDRICH MULLHOFF)<br>* das ganze Dokument *<br>--- | 1-3,5,6 | B65D45/34<br>F16B2/08<br>F16B2/18 |
| A | FR-A-1 219 395 (AUXILEC)<br>* das ganze Dokument *<br>--- | 1-6 | |
| A | DE-A-3 339 109 (THEODOR SCHEMM)<br>* das ganze Dokument *<br>--- | 7 | |
| A | GB-A-665 405 (THORPE LIMITED)<br>* das ganze Dokument *<br>--- | 7 | |
| D,A | DE-A-2 655 772 (MESSERSCHMITT-BÖLLKOW-BLOHM)<br>* das ganze Dokument *<br>--- | 1 | |
| D,A | GB-A-1 249 499 (AVICA EQUIPMENT LTD)<br>* das ganze Dokument *<br><br>----- | 1 | |
| | | | **RECHERCHIERTE SACHGEBIETE (Int. Cl.5)**<br><br>F16L<br>B65D<br>F16B |

Der vorliegende Recherchenbericht wurde für alle Patentansprüche erstellt

| Recherchenort | Abschlußdatum der Recherche | Prüfer |
|---|---|---|
| DEN HAAG | 04 JUNI 1992 | ARESO Y SALINAS |